# EUROPÄISCHE PATENTANMELDUNG

(11) **EP 1 995 473 A2**
(43) Veröffentlichungstag der Anmeldung: **26.11.2008**
(21) Anmeldenummer: 08015989.0
(22) Anmeldetag: 20.04.2004
(51) Int. Cl.: F16B 12/50, A47B 47/02

(54) **Verbindungselement und Gestellsystem**

(30) Priorität: 22.04.2003 CH 712032003
(62) Teilanmeldung aus: 04728311.4
(71) Anmelder: Duco AG Switzerland, 8157 Dielsdorf (CH)
(72) Erfinder: Egli, Rolf, 8932 Mettmenstetten (CH)
(74) Vertreter: Frei Patent Attorneys

(57) **Zusammenfassung**

Ein Verbindungselement (1) zur Verbindung von Streben (10) eines möbelartigen Gestells weist mehrere, von einem Zentralelement (2) ausgehende Kupplungselemente (3) zur Verbindung mit rohrförmigen Streben (10) auf. Das Zentralelement (2) weist ferner zwei rotationszylindrische Aussparungen zur Aufnahme von zweiten Streben (14) auf, die mit demselben Innendurchmesser und miteinander fluchtend sowie senkrecht zu den Kupplungselementen (3) angeordnet sind.

Ein entsprechendes Gestellsystem weist Verbindungselemente (1) und rohrförmige Streben (10) auf, deren jeweilige Längsachsen in einer gemeinsamen Ebene oder Regalebene liegen, und rohrförmige zweite Streben (14) zur Verbindung von Regalebenen, wobei ein Aussendurchmesser einer zweiten Strebe (14) einem Innendurchmesser der rotationszylindrischen Aussparungen der Zentralelemente (2) der Verbindungselemente (1) entspricht.

## Beschreibung

Die Erfindung bezieht sich auf das Gebiet zerlegbarer Gestellkonstruktionen für den Möbelbau, insbesondere auf ein Verbindungselement und ein Gestellsystem gemäss dem Oberbegriff der Patentansprüche 1 und 8, sowie eine Giessform zu Herstellung eines Verbindungselements gemäss dem Oberbegriff des Patentanspruchs 15.

### STAND DER TECHNIK

Derartige Verbindungselemente und darauf basierende Gestellsysteme sind beispielsweise aus EP 0 400 345 B1 und den darin zitierten Schriften bekannt. Dabei sind in rohrfömigen Streben Keile oder keilförmige Hülsen eingesetzt. Diese werden mittels einer Spannschraube gegeneinander gezogen, verkeilen sich mit den Streben und erzeugen dadurch eine kraftschlüssige Verbindung mit einem Eckverbindungselement. Die Verbindungselemente sind in der Regel kompliziert zu fertigen, weisen eine Menge loser Einzelteile auf und benötigen oftmals spezielle Montagewerkzeuge.

### DARSTELLUNG DER ERFINDUNG

Es ist deshalb Aufgabe der Erfindung, ein Verbindungselement und ein Gestellsystem der eingangs genannten Art zu schaffen, welche die oben genannten Nachteile behebt, sowie eine Giessform zur Herstellung eines Verbindungselements.

Diese Aufgabe lösen eine ein Verbindungselement und ein Gestellsystem mit den Merkmalen der Patentansprüche 1 und 8.

Ein Verbindungselement weist Kupplungslemente auf, die eine rotationszylindrische Grundform mit mindestens einer Kupplungsausnehmung aufweisen. Eine Kupplungsausnehmung ist durch eine im wesentlichen senkrecht zu einer Achse des Zylinders verlaufenden Quernut und durch eine parallel zur Achse des Zylinders von einer Stirnseite des Kupplungselements bis zur Quernut führenden Längsnut gebildet.

Das erfindungsgemässe Verbindungselement erlaubt, in einfacher Weise eine Verbindung zu einer korrespondierend ausgebildeten Strebe eines Gestells herzustellen, ohne dass irgendwelche Zusatzteile wie Keile, Schrauben etc. erforderlich sind. Auch müssen keine Gewinde in das Verbindungselement geschnitten werden. Ebenso sind keine Werkzeuge zum Herstellen oder Trennen einer Verbindung notwendig.

Zum Herstellen einer Verbindung wird eine Strebe über das Kupplungslement geschoben, wobei mindestens ein nach innen weisendes Verriegelungselement der Strebe in der Nut des Kupplungslements geführt wird. Nachdem das Kupplungselement die Position der Quernut erreicht, wird es durch Drehen der Strebe um ihre Achse in die Quernut hineingedreht. Dabei sind die Quernut und/oder das Kupplungselement derart geformt, dass sie sich beim Drehen miteinander verklemmen. In einer bevorzugten Ausführungsform der Erfindung rastet das Verriegelungselement hinter einer Ausformung der Quernut, die ein Einrastelement bildet, ein.

Das Verklemmen geschieht beispielsweise dadurch, dass beim Drehen der Strebe eine Stirnfläche der Strebe gegen eine erste Fläche der Quernut gedrückt und eine Kontaktfläche des Verriegelungselements gegen eine zweite Fläche der Quernut gedrückt wird, wobei die erste und zweite Fläche der Quernut einander gegenüberstehen.

In einer bevorzugten Ausführungsform der Erfindung sind die Längsnut und die Quernut in Umfangsrichtung, respektive in Achsrichtung des Kupplungselements gesehen, symmetrisch zueinander angeordnet, das heisst, dass die Strebe nach dem Schieben entlang der Längsnut in beide Drehrichtungen in die Quernut hineindrehbar ist. Damit wird es möglich, an beiden Enden einer Strebe jeweils ein gleich geartetes Kupplungselement in die Strebe einzuschieben und dann die Strebe durch Verdrehen gleichzeitig an beiden Enden zu verriegeln. Dabei müssen die beiden Verbindungselemente nicht gegeneinander verdreht werden, was von Vorteil ist, wenn sie bereits mit anderen Gestellteilen kombiniert sind.

Ein Verbindungselement weist in der Regel zwei bis vier Kupplungselemente auf, deren jeweilige Längsachsen in einer gemeinsamen Ebene oder Regalebene liegen. Sind die Winkel er Kupplungselemente zueinander ein vielfaches eines rechten Winkels, so lässt sich daraus, zusammen mit entsprechenden Streben, eine Ebene eines rechtwinkligen Regals zusammensetzen.

In einer bevorzugten Ausführungsform der Erfindung sind die Kupplungselemente durch ein Zentralelement miteinander verbunden. Das Zentralelement weist ein Rohr auf, dessen Innendurchmesser einem Aussendurchmesser einer Vertikalstrebe entspricht. Etwa in der Mitte des Rohres weist dieses eine Lochplatte oder Trennplatte auf, die senkrecht zur Rohrachse verläuft und in der Mitte ein Loch aufweist. Zweite Streben oder Vertikalstreben sind zur Verbindung von Regalebenen senkrecht zu den Regalebenen angeordnet. Sie weisen an einem Ende ein durch das Loch passendes Aussengewinde auf, und an einem anderen Ende ein korrespondierendes Innengewinde. Alternativ dazu weisen die Vertikalstreben an beiden Enden Innengewinde auf, in welche ein Gewindestück einschraubbar ist. Zur Montage mehrerer Gestellebenen wird eine erste Vertikalstrebe in das Rohr des Zentralelements und mit dem Aussengewinde respektive einem eingedrehten Gewindestück durch das Loch gesteckt und mit dem Innengewinde einer zweiten Vertikalstrebe verschraubt.

Das Zentralelement kann auch anders als rohrförmig, jedoch auch mit rotationszylindrischen Aussparungen zur Aufnahme von Vertikalstreben ausgestaltet sein. Diese rotationszylindrischen Aussparungen sind vorzugsweise mit demselben Innendurchmesser und miteinander fluchtend angeordnet, und durch ein Loch miteinander verbunden.

Der Erklärung halber wurde die Erfindung mit Bezug auf eine horizontale respektive vertikale Ausrichtung von Gestellelementen erklärt. Es können aber auch einzelne vertikale Gestellebenen mittels der Kupplungselemente miteinander verbunden werden, und diese Gestellebenen wiederum mittels horizontal verlaufender "Vertikalstreben" verbunden werden.

Ein Gestellsystem gemäss der Erfindung weist die beschriebenen Verbindungselemente und Streben auf. Die Streben zur Verbindung mit einem Kupplungselement sind entweder durchgehend oder zumindest an den Enden rohrförmig ausgebildet. Der Innendurchmesser dieser rohrförmigen Abschnitte entspricht dem Aussendurchmesser der Kupplungselemente. Die Streben weisen an mindestens einem Ende jeweils mindestens ein Verriegelungselement auf, welches von der Rohrwand aus in radialer Richtung in das Lumen, also in den Hohlraum des Rohres hineinragt. Verriegelungselemente an beiden Enden einer Streben fluchten miteinander, das heisst, sie sind in Umfangsrichtung gleich orientert. Beim Verbinden mit symmetrischen Verbindungselemente an beiden Enden einer Strebe sind auch die Verbindungselemente gleich orientiert.

Eine Giessform zur Herstellung eines Verbindungselements gemäss der Erfindung weist zwei im Wesentlichen spiegelsymmetrische Formhälften auf. Eine Trennebene zwischen den Formhälften entspricht dabei einer Ebene, die durch die Achsen der mindestens zwei Kupplungselemente definiert ist. Aufgrund der vorteilhaften Gestaltung der Verbindungselemente, insbesondere der Anordnung der Nuten und der Gestaltung des Zentralelements, sind keine weiteren Formteile zur Herstellung der Hinterschneidungen durch die Nuten notwendig.

Weitere bevorzugte Ausführungsformen gehen aus den abhängigen Patentansprüchen hervor.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen:
- Figuren 1 und 2: ein Verbindungselement mit zwei Kupplungselementen in einer perspektivischen Ansicht und einer Aufsicht;
- Figuren 3 und 4: ein Verbindungselement mit drei Kupplungselementen in einer perspektivischen Ansicht und einer Aufsicht;
- Figur 5: eine perspektivische Ansicht eines Verbindungselements und einer Strebe;
- Figur 6: eine perspektivische Ansicht eines Gestells mit Detailansichten von Verbindungen von Vertikalstreben; und
- Figur 7: eine Aufsicht auf ein Gestell, gebildet unter Verwendung von Verbindungselementen mit vier Kupplungselementen.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

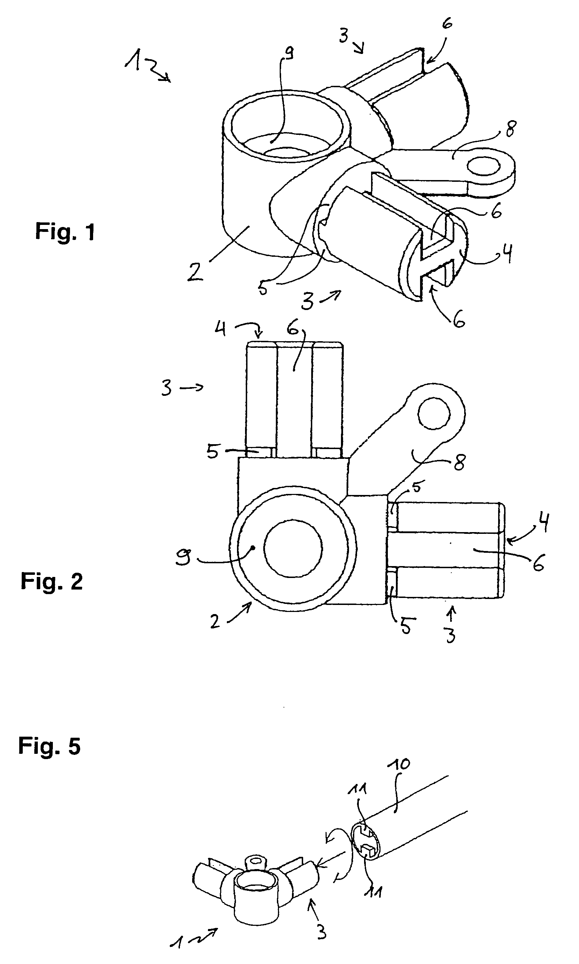

Figuren 1 und 2 zeigen ein Verbindungselement 1 mit zwei Kupplungselementen 3 in einer perspektivischen Ansicht und einer Aufsicht. Das Verbindungselement ist ein Eckverbindungsstück 1 mit einem Zentralelement 2 und zwei Kupplungselementen 3. Ein Kupplungselement 3 weist mindestens eine Kupplungsausnehmung auf, die durch eine Quernut 5 und eine beispielsweise rechteckförmige Längsnut 6 gebildet ist. Vorzugsweise weist ein Kupplungselement 3 zwei gegenüberliegende Kupplungsausnehmungen auf, die in Umfangsrichtung symmetrisch zueinander angeordnet sind.

Ein Kupplungselement 3 weist vorzugsweise einen vollzylindrischen Teil, also einen Teil ohne Ausnehmungen auf. Dieser weist im Querschnitt eine äussere Begrenzung entsprechend einem Strebenquerschnitt auf. Bei rotationszylindrischen Streben 10 ist der vollzylindrische Teil ebenfalls rotationszylindrisch und weist einen Aussendurchmesser entsprechend demjenigen einer Strebe 10 auf. Auf der nach aussen gerichteten, also der Strebe 10 zugewandten Seite bildet der vollzylindrische Teil eine Begrenzung der Quernut 5. Der vollzylindrische Teil erzielt eine Beabstandung einer ersten Strebe vom Zentralelement 2 und von weiteren gegebenenfalls am Zentralelement 2 und im Winkel zur ersten Strebe montierten weiteren Streben. Beim Verdrehen der Strebe 10 bei der Montage werden deshalb das Zentralelement 2 oder andere Streben 10 nicht verkratzt. Bei dem in den Figuren gezeigten relativ dünnwandigen Zentralelement 2 wird durch die vollzylindrischen Teile die Stabilität des Verbindungselements 1 erhöht.

Vom Zentralelement 2 gehen zwischen den Kupplungselementen 3 angeordnete Tragarme 8 zu Befestigung von beispielsweise plattenförmigen Möbelelbauelementen, insbesondere Tablaren aus. Diese sind beispielsweise für Schraubverbindungen oder zum Einsetzen von Saugnäpfen zur Halterung von Glasplatten vorgesehen. Die Tragarme 8 sind für das Auflegen der Möbelelbauelemente vorgesehen. Sie unterstützen die Möbelelbauelemente, so dass die Möbelelbauelemente ohne weitere Befestigungsmittel in ein montiertes Rohrsystem eingelegt werden können. Die Tragarme 8 sind in Ecken zwischen den vollzylindrischen Teilen eingesetzt, wodurch eine stabile Befestigung der Tragarme 8 erzielbar ist.

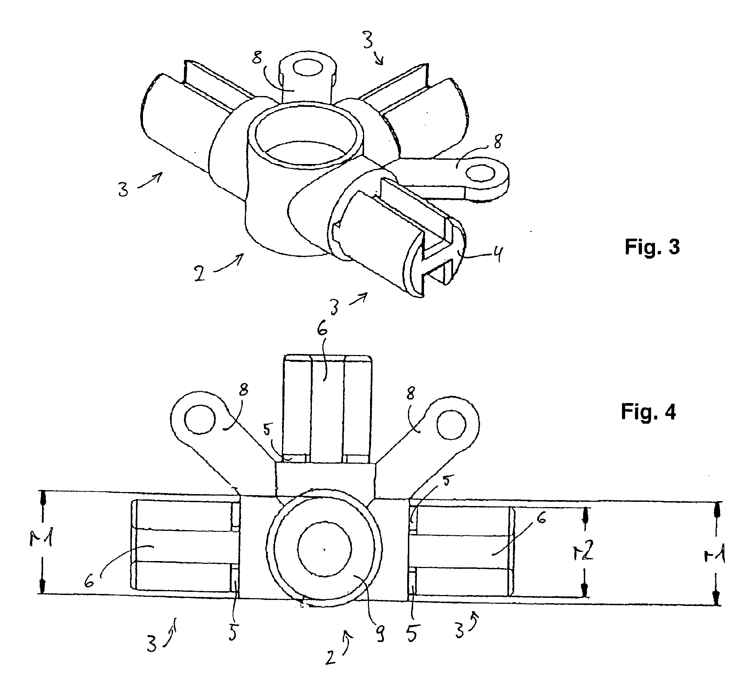

Figuren 3 und 4 zeigen ein Verbindungsstück 1 mit drei Kupplungselementen 3 in einer perspektivischen Ansicht und einer Aufsicht. Der vollzylindrische Teil eines Kupplungselements 3, erstreckt sich von der Quernut 5 zum Zentralelement 2. Ein Durchmesser r1 dieses vollzylindrischen Teils beträgt beispielsweise 19 mm, vorzugsweise zumindest annähernd einem Aussendurchmesser einer Strebe 10 entsprechend. Eine Länge des vollzylindrischen Teils beträgt beispielsweise einen Viertel eines Strebendurchmessers, oder 2 mm bis 10 mm. Ein Durchmesser r2 des Kupplungselements 3 im Bereich zwischen Quernut 5 und Stirnfläche des Kupplungselements 3 beträgt beispielsweise 16.5 mm, entsprechend einem Innendurchmesser einer Strebe 10. Das Zentralelement 2 wird durch ein Rohr zur Aufnahme einer Vertikalstrebe 14 gebildet. Das Rohr weist in axialer Richtung ungefähr in der Mitte eine senkrecht zur Rohrachse angeordnete Lochplatte oder Trennplatte 9 auf. Diese weist in der Mitte ein Loch auf. Eine Vertikalstrebe 14 weist entweder auf der ganzen Länge einen Aussendurchmesser entsprechend dem Innendurchmesser des Zentralelements 2 auf, oder einen Aussendurchmesser gleich dem Aussendurchmesser des Zentralelements 2 und einen in das Zentralelement 2 passenden Zapfen.

Figur 5 zeigt eine perspektivische Ansicht eines Eckverbindungsstücks 1 und einer Strebe 10. Mit Pfeilen ist eine geradlinige Bewegung zum Aufstecken der Strebe 10 auf ein Kupplungselement 3 und eine anschliessende Verdrehung zur Verriegelung angezeigt. Zwei Verriegelungselemente 11 sind am äussersten Ende der Strebe 10 angeordnet. Eine Begrenzungsfläche der Verriegelungselemente 11 fällt also mindestens annähernd mit einer Endbegrenzungsfläche der Strebe 10 zusammen. Die Verriegelungselemente 11 erstrecken sich vom Rohrumfang in radialer Richtung zur Rohrachse der Strebe 10 hin. Beim Aufstecken werden die Verriegelungselemente 11 durch die Quernuten 5 des Kupplungselements 3 geführt, bis das Rohr an den vollzylindrischen Teil des Kupplungselements 3 anstösst. Beim anschliessenden Verdrehen verklemmen sich die Verriegelungselemente 11 gegen eine Wand der Quernuten 5. Dazu ist eine Breite der Quernut, von einem Übergang zur Längsnut aus in beide Richtungen senkrecht zur Zylinderachse ausgehend in axialer Richtung, das heisst parallel zu Zylinderachse, grösser ist als an einer von der Längsnut entfernteren Stelle. An einer gegenüberliegenden, dem Zentralelement 2 zugewandten Seite, weist die Quernut eine im wesentlichen plane Fläche, zumindest an der Peripherie, gegen welche die Strebe 10 gedrückt wird.

In einer bevorzugten Ausführungsform der Erfindung nimmt die Breite der Quernut 5, von der Längsnut 6 ausgehend, zuerst ab, dann zu, und dann wieder ab. Dadurch entsteht ein Einrastelement 7 , welches ein Einrasten des Verriegelungselements 11 beim Verdrehen bewirkt und ein unbeabsichtigtes Lösen der Strebe 10 verhindert.

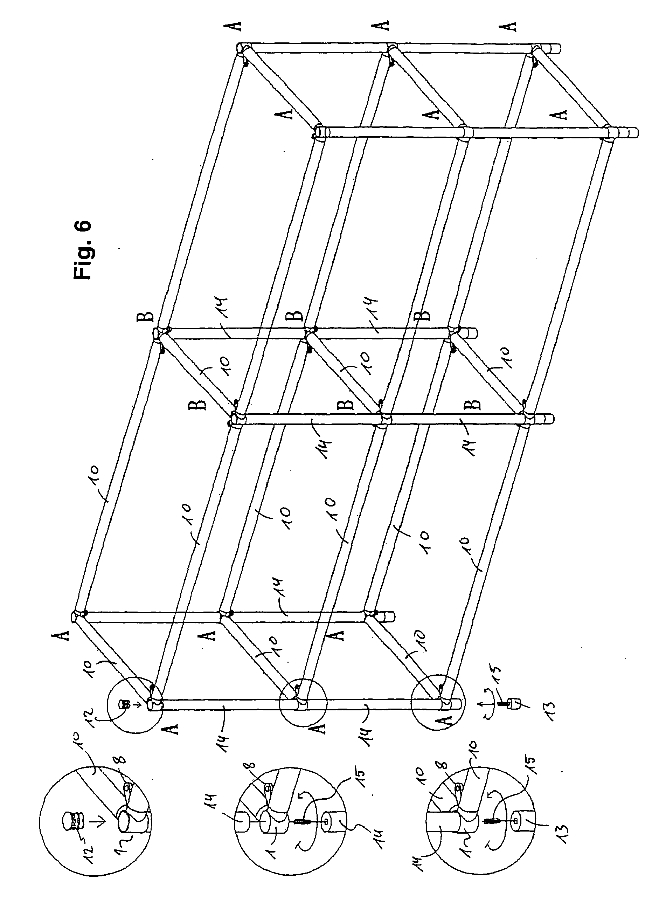

Figur 6 zeigt eine perspektivische Ansicht eines Gestells mit Detailansichten von Verbindungen von Vertikalstreben. An den mit A bezeichneten Stellen sind zweiarmige Eckverbindungsstücke eingesetzt, an den mit B bezeichneten Stellen dreiarmige Eckverbindungsstücke. Übereinanderliegende horizontale Ebenen des Gestells sind durch Vertikalstreben 14 verbunden. Die Vertikalstreben 14 weisen an beiden Enden jeweils ein konzentrisches und in die Strebe hineinragendes Innengewinde auf. Ein in das Innengewinde passendes Gewindestück 15 ist durch die Öffnung der Lochplatte 9 eines Zentralelements führbar und verbindet zwei übereinander angeordnete Vertikalstreben 14. An einer Oberseite des Gestells sind Deckel 12, beispielsweise aus Kunststoff, in die Zentralelemente 2 eingesetzt. An einer Unterseite des Gestell sind Füsse 13 mit denselben Gewinden wie die Vertikalstreben 14 in die jeweiligen Zentralelemente 2 respektive die darüberliegenden Vertikalstreben 14 eingeschraubt.

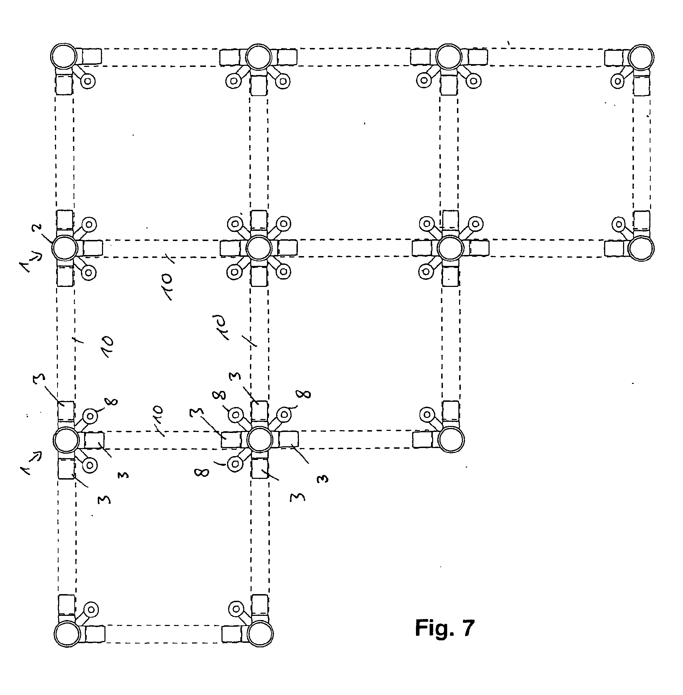

Figur 7 zeigt eine Aufsicht auf ein Gestell, gebildet unter Verwendung von Verbindungselementen mit zwei, drei und vier Kupplungselementen.

Die Eckverbindungsstücke 1 lassen sich durch Giessverfahren einstückig herstellen, wobei aufgrund der vorteilhaften Form lediglich zwei im Wesentlichen identische Formhälften benötigt werden. Alle Hinterschneidungen durch die Nuten können so problemlos erzeugt werden. Die Verriegelungselemente 11 sind beispielsweise im wesentlichem rechteckige oder halbrunde Zungen, die in die Streben eingeschweisst, oder gelötet werden. Alternativ können sie auch durch Biegen eines hervorstehenden Teils der Strebe erzeugt werden.

### BEZUGSZEICHENLISTE

- 1: Eckverbindungsstück
- 2: Zentralelement
- 3: Kupplungselement
- 4: Stirnseite
- 5: Quernut
- 6: Längsnut
- 7: Einrastelement
- 8: Tragarme
- 9: Lochplatte
- 10: Strebe
- 11: Verriegelungselement
- 12: Deckel
- 13: Fuss
- 14: Vertikalstrebe
- 15: Gewindestück
- A: zweiarmiges Eckverbindungsstück
- B: dreiarmiges Eckverbindungsstück

## Patentansprüche

1. **Verbindungselement** (1) zur Verbindung von Streben (10) eines möbelartigen Gestells, aufweisend mehrere, von einem Zentralelement (2) ausgehende Kupplungselemente (3) zur Verbindung mit rohrförmigen ersten Streben (10),
**dadurch gekennzeichnet,**
**dass** das Zentralelement (2) zwei rotationszylindrische Aussparungen zur Aufnahme von zweiten Streben (14) aufweist, die mit demselben Innendurchmesser und miteinander fluchtend sowie senkrecht zu den Kupplungselementen (3) angeordnet sind.

2. Verbindungselement (1) gemäss Anspruch 1, **dadurch gekennzeichnet, dass** die beiden rotationszylindrischen Aussparungen durch ein Loch (9) miteinander verbunden sind.

3. Verbindungselement (1) gemäss Anspruch 2, **dadurch gekennzeichnet, dass** das Zentralelement (2) gebildet ist durch ein Rohr mit einer senkrecht zur Achse des Rohres angeordneten, gelochten Platte (9).

4. Verbindungselement (1) gemäss einem der Ansprüche 1 bis 3, aufweisend zwei bis vier Kupplungselemente, deren jeweilige Längsachsen in einer gemeinsamen Ebene oder Regalebene liegen.

5. Verbindungselement (1) gemäss einem der Ansprüche 1 bis 4, **dadurch gekennzeichnet, dass** ein Kupplungselement (3) einen vollzylindrischen Teil aufweist, der im Querschnitt eine äussere Begrenzung entsprechend einem Strebenquerschnitt aufweist und zur Beabstandung einer montierten Strebe (10) vom Zentralelement (2) ausgebildet ist.

6. Verbindungselement (1) gemäss einem der Ansprüche 1 bis 5, **dadurch gekennzeichnet, dass** das Verbindungselement (1) bezüglich einer Ebene, die durch die Achsen der Kupplungselemente (3) definiert ist, spiegelsymmetrisch geformt ist.

7. Verbindungselement (1) gemäss einem der Ansprüche 1 bis 6, **dadurch gekennzeichnet, dass** das Zentralelement (2) Tragarme (8) zur Halterung von Möbelbauelementen aufweist, insbesondere zur unterstützenden Halterung.

8. **Gestellsystem,** aufweisend Verbindungselemente (1) gemäss einem der Ansprüche 1 bis 7 und rohrförmige erste Streben (10), wobei die Verbindungselemente (1) zwei bis vier Kupplungselemente (3) aufweisen, deren jeweilige Längsachsen in einer gemeinsamen Ebene oder Regalebene liegen, wobei die ersten Streben (10) zur Verbindung mit den Kupplungselementen (3) vorgesehen sind, und rohrförmige zweite Streben (14) zur Verbindung von Regalebenen senkrecht zu den Regalebenen angeordnet sind, und ein Aussendurchmesser einer zweiten Strebe (14) einem Innendurchmesser der rotationszylindrischen Aussparungen der Zentralelemente (2) der Verbindungselemente (1) entspricht.

9. Gestellsystem gemäss Anspruch 8, **dadurch gekennzeichnet, dass** die rotationszylindrischen Aussparungen der Zentralelemente (2) durch ein Loch (9) miteinander verbunden sind, und die zweiten Streben (14) durch Gewindestücke, welche jeweils durch das Loch (9) führbar sind, miteinander verschraubbar sind.

10. Gestellsystem gemäss Anspruch 8 oder 9, **dadurch gekennzeichnet, dass** die Kupplungslemente (3) eine rotationszylindrische Grundform aufweisen, und zum Verbinden einer ersten Strebe (10) mit einem Kupplungselement (3) die erste Strebe (10) auf das Kupplungselement (3) aufsteckbar ist.

11. Gestellsystem gemäss einem der Ansprüche 8 bis 10, **dadurch gekennzeichnet, dass** die ersten Streben (10) an mindestens einem Ende jeweils mindestens ein Verriegelungselement (11) aufweisen, welches von der Rohrwand aus in radialer Richtung in das Lumen des Rohres hineinragt.

12. Gestellsystem gemäss Anspruch 11, **dadurch gekennzeichnet, dass** die Streben (10) an beiden Enden zuäusserst mindestens ein Verriegelungselement (11) aufweisen, und diese Verriegelungselemente (11) in Umfangsrichtung gleich orientiert sind.

13. Gestellsystem gemäss einem der Ansprüche 8 bis 12 , **dadurch gekennzeichnet, dass** die zweiten Streben (14) jeweils an einem Ende ein Innengewinde und am anderen Ende ebenfalls ein Innengewinde oder ein korrespondierendes Aussengewinde zur Verbindung mit einer weiteren zweiten Strebe (14) aufweisen.

14. Gestellsystem gemäss einem der Ansprüche 8 bis 13, **dadurch gekennzeichnet, dass** es Füsse (13) mit denselben Gewinden wie die zweiten Streben (14) aufweist, und die Füsse (13) **dadurch** in die Zentralelemente (2) respektive darüberliegende zweite Streben (14) einschraubbar sind.

15. **Giessform** zu Herstellung eines Verbindungselements (1) gemäss einem der Ansprüche 1 bis 7, **dadurch gekennzeichnet, dass** sie zwei im Wesentlichen spiegelsymmetrische Formhälften aufweist.
